# EUROPEAN PATENT APPLICATION

(11) **EP 4 686 050 A1**
(43) Date of publication of application: **28.01.2026**
(21) Application number: 24190701.3
(22) Date of filing: 24.07.2024
(51) Int. Cl.: H02K 9/19, H02K 9/197, H02K 9/00

(54) **AN ELECTRIC MACHINE ASSEMBLY, A COMPUTER SYSTEM AND A METHOD**

(71) Applicant: Volvo Truck Corporation, 405 08 Göteborg (SE)
(72) Inventor: GAO, Feng, 414 78 Göteborg (SE); ALM, Ivar, 475 31 Öckerö (SE); SUSIC, Ronald, 417 61 Göteborg (SE); ANDERSSON, Rasmus, 422 49 Hisings Backa (SE); ODEHED, Emma, 435 42 Mölnlycke (SE); MAMOLIS, Georgios, 414 62 Götrborg (SE); RANGALAH, Logesh Kumar, 442 41 Kungälv (SE); ILGÜN, Ümit, 417 23 Göteborg (SE); HAGLUND, Anne, 461 59 Trollhättan (SE)
(74) Representative: Kransell & Wennborg KB

(57) **Abstract**

The disclosure relates to an electric machine assembly (1) comprising a stator winding (10) comprising coils arranged around a first axis (H) between a first end winding (12) and a second end winding (14). The electric machine assembly further comprises a winding housing (16) accommodating the stator winding (10). The winding housing (16) further comprises a first coolant inlet (18) for a first coolant (A) and a second coolant inlet (20) for a second coolant (B). The first coolant inlet (18) is adapted to discharge the first coolant (A) into the winding housing (16) towards the stator winding (10). The second coolant inlet (20) is adapted to discharge the second coolant (B) into the housing (16) towards the first end winding (12) and/or towards the second end winding (14). The disclosure further relates to a computer-implemented method (2) a computer system (600) and a vehicle, vessel or stationary machinery comprising the electric machine assembly.

## Description

### TECHNICAL FIELD

The disclosure relates generally to cooling of electric machines. In particular aspects, the disclosure relates to an electric machine assembly, a computer system and method for cooling a stator winding of the electric machine assembly. The disclosure can be applied to heavy-duty vehicles, such as trucks, buses, and construction equipment, among other vehicle types. The disclosure can also be applied to vessels, such as marine vessels, and to industrial appliances such as stationary electric machinery. Although the disclosure may be described with respect to a particular vehicle, the disclosure is not restricted to any particular appliance.

### BACKGROUND

Stator windings of electric machines comprise end windings, which are located outside of a stator core. The end windings comprise a complicated structure of conductors, which during operation of the electric machine, are at high voltage. Formation of hot spots at the end windings is a well-known problem in the art.

When an electric machine is running at high power, the temperature of the end windings of its stator windings can reach temperatures of 180-200 °C, which can conventionally be cooled down by oil. However, in some scenarios oil cooling is not sufficient. A further problem is that the oil may be overheated and degraded at such hot spot temperatures. Degraded oil may leave residue in the winding housing and may be less efficient as a coolant.

### SUMMARY

According to a first aspect of the disclosure, there is provided an electric machine assembly comprising a stator winding which in turn comprises coils arranged around a first axis between a first end winding and a second end winding of the stator winding, The electric machine assembly further comprises a winding housing accommodating the stator winding. The winding housing comprises a first coolant inlet for a first coolant and a second coolant inlet for a second coolant.

The first coolant inlet is adapted to discharge the first coolant into the winding housing towards the stator winding. The second coolant inlet is adapted to discharge the second coolant into the housing towards the first end winding and/or towards the second end winding. The first aspect of the disclosure may seek to cool the first end winding and/or the second end winding using the first coolant and the second coolant while at the same time cooling the first coolant using the second coolant. A technical benefit may include reducing hot spot temperatures at the end windings while at the same time avoiding degradation of the first coolant due to overheating.

The stator winding comprising the end windings may be arranged along the first axis. In operation of the electric machine assembly, the first axis may be substantially horizontal. Thus, the first end winding, the stator winding and the second end winding may be coaxially arranged along the first axis.

The first coolant may be supplied to the winding housing at the stator winding, in other words between the first end winding and the second end winding. The winding housing may further comprise conduits to distribute and discharge the first coolant along the stator winding and at the end windings.

The second coolant may be supplied to the winding housing via the second coolant inlet at the first end winding and/or at the second end winding. The second coolant inlet is adapted to discharge the second coolant into the housing towards the first end winding and/or towards the second end winding.

Thereby, the first end winding and/or the second end winding are cooled by a combined cooling effect of the first coolant and the second coolant.

Optionally in some examples, including in at least one preferred example, the electric machine assembly further comprises a first source of the first coolant, the first source being fluidly connected to the first coolant inlet. The electric machine assembly optionally comprises a second source of the second coolant, the second source being fluidly connected to the second coolant inlet. The second coolant may be different from the first coolant. A technical benefit may include an improved cooling capacity by the electric machine assembly using the first coolant in combination with the second coolant.

Optionally in some examples, including in at least one preferred example, the first coolant inlet is adapted to discharge the first coolant into the winding housing towards the winding at a position between the first end winding and the second end winding. The winding housing may further comprise conduits for distributing the first coolant along an axial length of the stator winding and towards the first end winding and/or the second end winding such that the first coolant inlet may be adapted to discharge the first coolant towards the stator winding and towards the first end winding and/or the second end winding.

Optionally in some examples, including in at least one preferred example, the first source of the first coolant comprises oil. Oil is a conventional coolant which may degrade if overheated. When discharged towards the stator winding and towards the first end winding and/or the second end winding, the oil absorbs heat from the stator winding and the first end winding and/or the second end winding. The first axis may be substantially horizontal in operation of the electric machine assembly. Therefore, oil may flow, by gravity, from the stator winding and from the first end winding and/or the second end winding orthogonally away from the windings and may collect and be drained from the winding housing in a location below the stator winding and the first end winding and/or the second end winding.

Optionally in some examples, including in at least one preferred example, the first coolant inlet is adapted to discharge at least a portion of the first coolant in the form of droplets towards the first end winding and/or towards the second end winding. The first coolant inlet may comprise a spray nozzle to discharge the first coolant as droplets.

Optionally in some examples, including in at least one preferred example, the second coolant inlet is adapted to discharge the second coolant into the housing towards the first end winding and/or towards the second end winding and onto at least a portion of the first coolant. Thereby, the second coolant may be applied to cool both the first coolant and the first end winding and/or the second end winding.

Optionally in some examples, including in at least one preferred example, the second coolant inlet is arranged along a circumference of the first end winding and/or the second end winding, such as along a part of the circumference or along the whole circumference, or more preferably along up to 80% of the circumference, or most preferably along up to 60% of the circumference. The second coolant inlet may comprise a plurality of nozzles distributed along at least part of the circumference of the first end winding and/or the second end winding. The second coolant inlet may be limited to an upper part of the circumference of the first end winding and/or the second end winding. The "upper part" of the circumference is herein to be understood as a part of the circumference as seen along a second axis, orthogonal to the first axis. The second axis, in operation of the electric machine assembly, may be a vertical axis, parallel with gravitational forces when the electric machine assembly is positioned on a horizontal surface. An upper part of the circumference is located away from gravitational forces as opposed to a lower part of the circumference which is located in a direction along the gravitational forces. In other words, the electrical machine assembly may, when in use, be arranged such that the upper part face upwards along the vertical axis.

The second coolant inlet may thereby be protected from being submerged by the first coolant which is discharged into the housing. Foaming of the first coolant is thereby avoided.

Optionally in some examples, including in at least one preferred example, the second source of the second coolant comprises compressed gas fluidly connected to a vortex tube adapted to receive the compressed gas and to supply gas as the second coolant to the second coolant inlet.

The vortex tube is a mechanical device that separates a compressed gas into hot and cold streams. Gas emerging from a hot end can reach temperatures of 200 °C, and gas emerging from a cold end can reach -50 °C. The vortex tube has no moving parts and works solely on compressed gas and does not use refrigerants, such as Freon. The cold gas may be used to cool down the first end winding and/or the second end winding, especially when the first coolant is not sufficient. The cold gas may also be used to cool the first coolant.

The compressed gas may be stored in pressurized containers. The compressed gas may alternatively be supplied by a compressor. The gas may be compressed air.

Optionally in some examples, including in at least one preferred example, the electric machine assembly further comprises a monitoring unit, and a controllable valve adapted to open and close the second coolant inlet. The monitoring unit may a temperature condition of the first end wind and/or the second end winding. The monitoring unit may be a temperature sensor or may be comprised in a computer system and connected to processing circuitry to monitor an expected upcoming power outtake of the electric machine assembly. The controllable valve may thereby be used to control the discharge of the second coolant such that the second coolant is discharged towards the first end winding and/or the second end winding when a temperature of the first end winding and/or the second end winding exceeds a threshold temperature. The controllable valve may also be used to control the discharge of the second coolant such that the second coolant is discharged towards the first end winding and/or the second end winding upon detection of an upcoming increased power outtake of the electric machine assembly, which increase power outtake might lead to overheating of the first end winding and/or the second end winding, and/or potential overheating of the first coolant.

According to a second aspect of the disclosure, there is provided a computer system comprising processing circuitry configured to control cooling of a stator winding of the electric machine assembly according to an example of the first aspect of the disclosure. The processing circuitry is configured to receive, from the monitoring unit, data indicative of a pre-determined temperature condition of the first end winding and/or of the second end winding, and to control the controllable valve to open the second coolant inlet to discharge the second coolant into the winding housing towards the first end winding and/or towards the second end winding and onto at least a portion of the first coolant. The second aspect of the disclosure may seek to control discharge of the second coolant such that the second coolant is applied on detection of the pre-determined temperature condition. A technical benefit may include saving the second coolant to occasions when it is needed to cool the first coolant and the first end winding and/or the second end winding and avoiding wasting the second coolant when it is not needed.

Optionally in some examples, including in at least one preferred example, the processing circuitry is further configured to receive, from the monitoring unit, data indicative of a termination of the pre-determined temperature condition of the first end winding and/or of the second end winding, and to control the controllable valve to close the second coolant inlet. Thus, after the discharging the second coolant upon detection of the pre-determined temperature condition, the processing circuitry may detect an end of the pre-determined temperature condition and may control the controllable valve to close and to stop discharging the second coolant when it is not needed anymore.

Optionally in some examples, including in at least one preferred example, the pre-determined temperature condition is a temperature exceeding a threshold temperature. Thus, the processing circuitry may detect a temperature of the first end winding and/or the second end winding, which temperature needs to be reduced to avoid overheating of the end windings and/or of the first coolant.

Optionally in some examples, including in at least one preferred example, the pre-determined temperature condition is an upcoming increased power outtake of the electric machine assembly. The processing circuitry may detect an upcoming situation which may lead to overheating. The processing circuitry may thus be configured to pre-emptively cool the first end winding and/or the second end winding and the first coolant.

According to a third aspect of the disclosure, there is provided a computer-implemented method for controlling cooling a winding of the electric machine assembly according to an example of the first aspect of the disclosure. The method comprises, by the processing circuitry receiving, from the monitoring unit, data indicative of a pre-determined temperature condition of the first end winding and/or of the second end winding. The method further comprises controlling, by the processing circuitry, the controllable valve to open the second coolant inlet to discharge the second coolant into the housing towards the first end winding and/or towards the second end winding and onto at least a portion of the first coolant.

Optionally in some examples, including in at least one preferred example, the method further comprises, by the processing circuitry receiving from the monitoring unit, data indicative of a termination of the pre-determined temperature condition of the first end winding and/or of the second end winding. Optionally, the method further comprises controlling the controllable valve to close the second coolant inlet.

The problems solved, and the technical benefits of the solution of the second aspect of the disclosure apply mutatis mutandis to the third aspect of the disclosure.

According to a fourth aspect of the disclosure, there is provided a computer program product comprising program code for performing, when executed by the processing circuitry, the method of any one of the examples of the third aspect of the disclosure.

According to a fifth aspect of the disclosure, there is provided a non-transitory computer-readable storage medium comprising instructions, which when executed by the processing circuitry, cause the processing circuitry to perform the method of any one of the examples of the third aspect of the disclosure.

According to a sixth aspect of the disclosure, there is provided a vehicle, a vessel or stationary machinery comprising the electric machine assembly according to any one of the examples of the first aspect of the disclosure. The electric machine assembly of the first aspect of the disclosure may thus be comprised in a propulsion electric machine of a vehicle or vessel. The electric machine assembly may also be comprised in an electrically driven work implement of an industrial appliance, such as a stationary electric machine.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**Fig. 1** is a vehicle according to an example.
**Fig. 2a****-c** is an electric machine assembly according to an example.
**Fig. 3** is an electric machine assembly and a computer system according to an example.
**Fig. 4** is a vortex tube according to an example.
**Fig. 5** is a flowchart of a method according to an example.
**Fig. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As discussed hereinabove, stator windings of electric machines comprise end windings, which are located outside of a stator core. The end windings comprise a complicated structure of conductors, which during operation of the electric machine, are at high voltage. Formation of hot spots at the end windings is a well-known problem in the art.

When an electric machine is running at high power, the temperature of the end windings of its stator windings can reach temperatures of 180-200 °C, which can conventionally be cooled down by oil. However, in demanding situations, oil cooling may not be sufficient. A further problem may be that coolants, in particularly when using oil, may be overheated and degraded, which would require service and change of the coolant. Potentially, degraded coolants, in particularly degraded oil, could damage the electric machine in which it is used.

Solutions to the problems outlined above are disclosed herein. It is suggested to use a second, additional, coolant to cool the end windings of an electric machine assembly. The second coolant being in addition to a first coolant. The first and second coolants may be selected to be of different types. The second coolant may be discharged directly towards the end windings. The second coolant may optionally also be discharged towards at least a part of the first coolant. Further, the second coolant may be discharged when required, or pre-emptively, when a higher power outtake of the electric machine assembly is foreseen. Effects of the exemplified solutions may be a more efficient cooling of the end windings by using two coolants. In addition, the first coolant may be cooled by the second coolant to reduce the risk of overheating of the first coolant. Further, the second coolant may be applied only when necessary, which may reduce energy consumption and consumption of the second coolant.

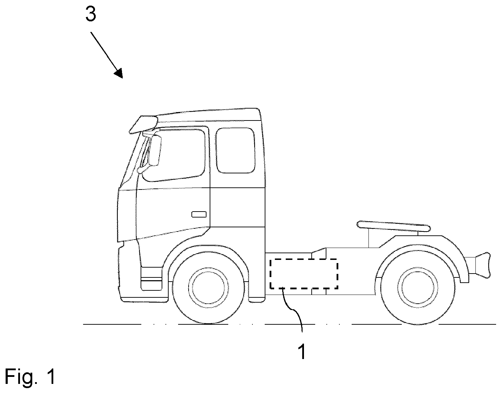

**Fig. 1** shows an example of a vehicle 3 according to the sixth aspect of the disclosure. The vehicle 3 may comprise an electric machine assembly 1 according to the first aspect of the disclosure. The electric machine assembly 1 of the first aspect of the disclosure may be comprised in a propulsion electric machine of a vehicle or vessel. The electric machine assembly may also be comprised in an electrically driven work implement of an industrial appliance, such as a stationary electric machine. The disclosure can therefore be applied to heavy-duty vehicles 3, such as trucks, buses, and construction equipment, among other vehicle types. The disclosure can also be applied to vessels, such as marine vessels, and to industrial appliances such as stationary electric machinery. Although **Fig. 1** may illustrate a vehicle, the disclosure is not restricted to any particular vehicle, vessel or appliance.

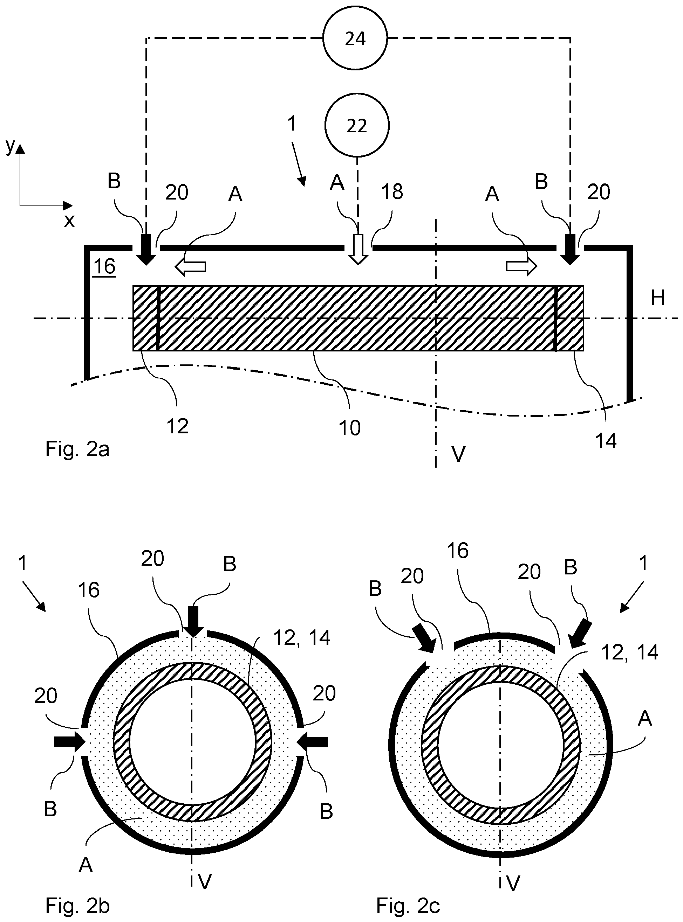

**Fig. 2a** is an electric machine assembly 1 according to an example. The electric machine assembly 1 comprises a stator winding 10 comprising coils arranged around a first axis H between a first end winding 12 and a second end winding 14 of the stator winding 10. The coils may be arranged in any suitable manner and is illustrated by the dashed lines in Fig. 2a along the axis H. The electric machine assembly further comprises a winding housing 16 accommodating the stator winding 10. The winding housing 16 further comprises a first coolant inlet 18 for a first coolant A and a second coolant inlet 20 for a second coolant B.

The first coolant inlet 18 is adapted to discharge the first coolant A into the winding housing 16 towards the stator winding 10, wherein the second coolant inlet 20 is adapted to discharge the second coolant B into the housing 16 towards the first end winding 12 and/or towards the second end winding 14.

An object of the exemplified electric machine assembly 1 is to cool the first end winding 12 and/or the second end winding 14 using the first coolant A and the second coolant B, while at the same time cooling the first coolant A using the second coolant B. Thereby, hot spot temperatures may be reduced at the end windings 12, 14 while at the same time avoiding degradation of the first coolant A due to overheating.

The stator winding 10 comprising the end windings 12, 14 may be arranged along the first axis H. In operation of the electric machine assembly 1, the first axis H may be substantially horizontal. The first end winding 12, the stator winding 10 and the second end winding 14 may be coaxially arranged along the first axis H.

The first coolant A may be supplied to the winding housing 16 via the first coolant inlet 18 at the stator winding 10, in other words between the first end winding 12 and the second end winding 14. The winding housing 16 may further comprise conduits (only conceptually shown by directional arrows indicating the first coolant A) to distribute and discharge the first coolant A along the stator winding 10 and at the end windings 12, 14.

The second coolant B may be supplied to the winding housing 16 via the second coolant inlet 20 at the first end winding 12 and/or at the second end winding 14. The second coolant inlet 20 may be adapted to discharge the second coolant B into the winding housing 16 towards the first end winding 12 and/or towards the second end winding 14.

Thereby, the first end winding 12 and/or the second end winding 14 may be cooled by a combined cooling effect of the first coolant A and the second coolant B.

The electric machine assembly 1 further comprises a first source 22 of the first coolant A, the first source 22 being fluidly connected to the first coolant inlet 18. The electric machine assembly 1 may further comprise a second source 24 of the second coolant B, the second source 24 being fluidly connected to the second coolant inlet 20.

The first coolant inlet 18 may be adapted to discharge the first coolant A into the winding housing 16 towards the stator winding 10 at a position between the first end winding 12 and the second end winding 14. The winding housing 16 may further comprise conduits (conceptually shown by the directional arrows) for distributing the first coolant A along an axial length of the stator winding 10 and towards the first end winding 12 and/or the second end winding 14 such that the first coolant inlet 18 may be adapted to discharge the first coolant A towards the stator winding 10 and towards the first end winding 12 and/or the second end winding 14.

The first source 22 of the first coolant A may comprise oil. While oil is one example of the first coolant A, and hence, even if the examples herein discuss oil as the first coolant A, the examples may also use any other suitable coolant. Oil is a conventional coolant for stator windings. The oil may degrade if overheated. When discharged towards the stator winding 10 and towards the first end winding 12 and/or the second end winding 14, the oil absorbs heat from the stator winding 10 and the first end winding 12 and/or the second end winding 14. As previously mentioned, the first axis H may be substantially horizontal in operation of the electric machine assembly 1. Therefore, oil may flow, by gravity, from the stator winding 10 and from the first end winding 12 and/or the second end winding 14, substantially orthogonally away from the windings 10, 12, 14, and may collect and be drained from the winding housing 16 in a location below the stator winding 10 and the first end winding 12 and/or the second end winding 14.

The first coolant inlet 18 may be adapted to discharge at least a portion of the first coolant A in the form of droplets towards the first end winding 12 and/or towards the second end winding 14. The first coolant inlet 18 may comprise a spray nozzle to discharge the first coolant A as droplets.

The second coolant inlet 20 is adapted to discharge the second coolant B into the winding housing 16 towards the first end winding 12 and/or towards the second end winding 14 and onto at least a portion of the first coolant A. Thereby, the second coolant B may be applied to cool both the first coolant A and the first end winding 12 and/or the second end winding 14.

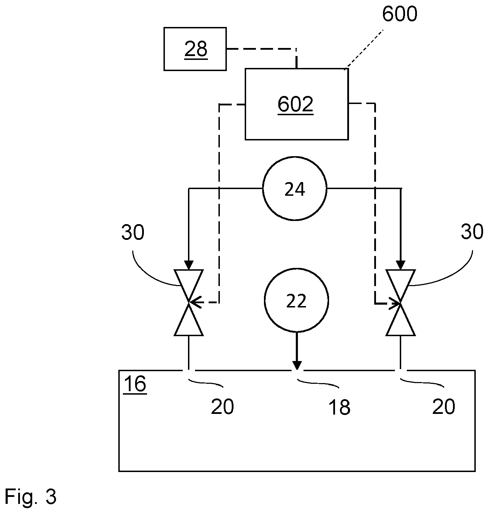

As exemplified in **Fig. 2b** and **Fig. 2c****,** the second coolant inlet may be arranged along a circumference of the first end winding 12 and/or the second end winding 14, such as along a part of the circumference, or along the whole circumference, or more preferably along up to 80% of the circumference, or most preferably along up to 60% of the circumference. The second coolant inlet 20 may comprise a plurality of nozzles distributed along at least a part of the circumference of the first end winding 12 and/or the second end winding 14. The second coolant inlet 20 may be limited to an upper part of the first end winding 12 and/or the second end winding 14. The "upper part" of the circumference is herein to be understood as a part of the circumference as seen along a second axis V, orthogonal to the first axis H. The second axis V, in operation of the electric machine assembly, may be a vertical axis, substantially parallel with gravitational forces when the electric machine assembly is positioned on a horizontal surface. The upper part of the circumference is located in a higher position along the second axis V with regard to gravitational forces as opposed to a lower part of the circumference which is located in a lower position along the second axis V with regard to gravitational forces. **Fig. 2b** is a view along the first axis H and shows how a plurality of nozzles forms the second coolant inlet 20 and are arranged along an upper 50% of the circumference. Fig. 3b is a view along the first axis H and shows an exemplary alternative configuration where a plurality of nozzles forms the second coolant inlet 20 and are arranged along an upper 25% of the circumference.

Since the first coolant may bay be a liquid, such as oil, which may flow and collect below the windings 10, 12, 14, the second coolant inlet 20 may be protected from being submerged by the first coolant A by arranging the second coolant inlet 20 at the upper part of the circumference. Foaming of the first coolant A may thereby also be avoided.

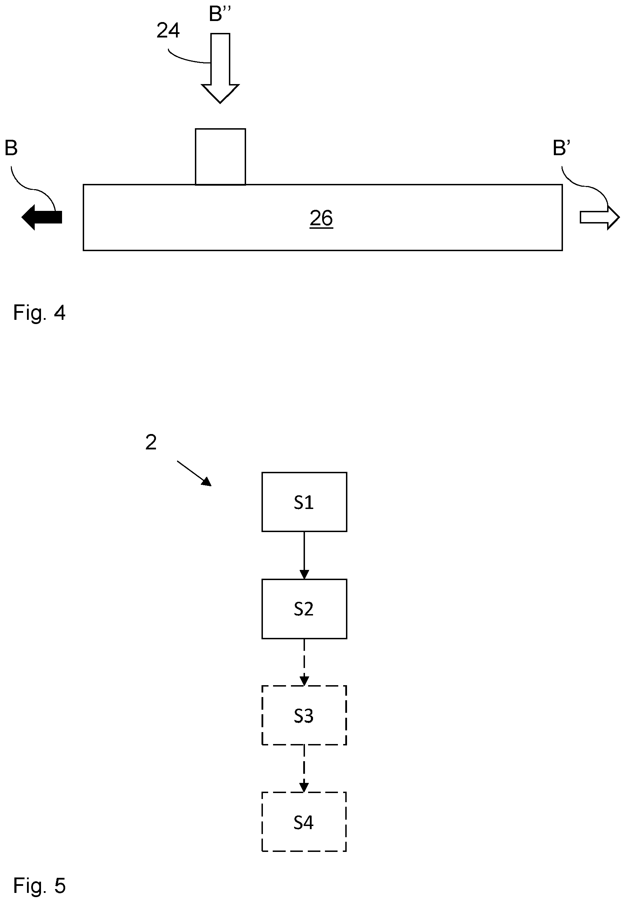

The second source 24 of the second coolant B may be compressed gas fluidly connected to a vortex tube 26, illustrated in **Fig. 4****,** adapted to receive the compressed gas and to supply gas as the second coolant B to the second coolant inlet 20.

The vortex tube 26 is a known mechanical device that separates a compressed gas B" into hot and cold streams of gas. Hot gas B' emerging from a hot end can reach temperatures of 200 °C, and cold gas B emerging from a cold end can reach -50 °C. The vortex tube 26 has no moving parts and works solely on compressed gas and does not use refrigerants, such as Freon. The cold gas may be used as the second coolant B for the first end winding 12 and/or the second end winding 14, especially when the first coolant A is not sufficient to cool the end windings 12, 14. The cold gas may also be used to cool the first coolant A.

The compressed gas B" may be stored in pressurized containers. The compressed gas B" may alternatively be supplied by a compressor. The compressed gas B" may be compressed air.

As shown in **Fig. 3****,** the electric machine assembly 1 may further comprise a monitoring unit 28, and a controllable valve 30 adapted to open and close the second coolant inlet 20. The monitoring unit 28 may monitor a temperature condition of the first end winding 12 and/or the second end winding 14. The monitoring unit 28 may be a temperature sensor or may be comprised in, or in communication with, a computer system 600 and connected to processing circuitry 602 to monitor an expected upcoming power outtake of the electric machine assembly 1. The controllable valve 30 may thereby be used to control the discharge of the second coolant B such that the second coolant B is discharged towards the first end winding 12 and/or the second end winding 14 when a temperature of the first end winding 12 and/or the second end winding 14 exceeds a threshold temperature. The controllable valve 30 may also be used to control the discharge of the second coolant B such that the second coolant B is discharged towards the first end winding 12 and/or the second end winding 14 upon detection of an upcoming increased power outtake of the electric machine assembly 1, which increased power outtake might lead to overheating of the first end winding 12 and/or the second end winding 14, and/or potential overheating of the first coolant A.

The computer system 600 comprises processing circuitry 602 configured to control cooling of a stator winding 10 of the electric machine assembly 1 according to an example of the first aspect of the disclosure. The processing circuitry 602 is configured to receive, from the monitoring unit 28, data indicative of a pre-determined temperature condition of the first end winding 12 and/or of the second end winding 14, and to control the controllable valve 30 to open the second coolant inlet 20 to discharge the second coolant B into the winding housing 16 towards the first end winding 12 and/or towards the second end winding 14 and onto at least a portion of the first coolant A. The computer system 600 control discharge of the second coolant B such that the second coolant B is applied on detection of the pre-determined temperature condition. Thereby, the second coolant may be saved for occasions when it is needed to cool the first coolant A and the first end winding 12 and/or the second end winding 14.

The processing circuitry 602 may further be configured to receive, from the monitoring unit 28, data indicative of a termination of the pre-determined temperature condition of the first end winding 12 and/or of the second end winding 14, and to control the controllable valve 30 to close the second coolant inlet 20. Thus, after the discharging the second coolant B upon detection of the pre-determined temperature condition, the processing circuitry 602 may detect an end of the pre-determined temperature condition and may control the controllable valve 30 to close and to stop discharging the second coolant B when it is not needed anymore.

The pre-determined temperature condition may be a temperature exceeding a threshold temperature. Thus, the processing circuitry 602 may, via the monitoring unit 28, detect a temperature of the first end winding 12 and/or the second end winding 14, which temperature is required to be reduced to avoid overheating of the end windings 12, 14 and/or of the first coolant A.

The pre-determined temperature condition may be an upcoming increased power outtake of the electric machine assembly 1. The processing circuitry 602 may, via the monitoring unit 28, detect an upcoming situation which may lead to overheating. The processing circuitry 602 may thus be configured to pre-emptively cool the first end winding 12 and/or the second end winding 14 and the first coolant A. Such an upcoming situation requiring an increased power outtake may be a foreseen uphill climb along a navigational route of the vehicle 3 comprising the electric machine assembly 1. Alternatively, the upcoming situation may be detection of an incline of the vehicle 3 comprising the electric machine assembly 1. The incline may be indicative of a hill climb of the vehicle 3, which might increase the likelihood of hotspot formation at the end windings 12, 14.

As shown in the flowchart of **Fig. 5****,** the disclosure also provides a computer-implemented method 2 for controlling cooling a stator winding 10 of the electric machine assembly 1 according to an example of the first aspect of the disclosure. The method 2 comprises, by the processing circuitry 602 receiving S1, from the monitoring unit 28, data indicative of a pre-determined temperature condition of the first end winding 12 and/or of the second end winding 14. The method 2 further comprises controlling S2, by the processing circuitry 602, the controllable valve 30 to open the second coolant inlet 20 to discharge the second coolant B into the winding housing 16 towards the first end winding 12 and/or towards the second end winding 14 and onto at least a portion of the first coolant A.

The method 2 may further comprise, by the processing circuitry 602, receiving S3 from the monitoring unit 28, data indicative of a termination of the pre-determined temperature condition of the first end winding 12 and/or of the second end winding 14. The method 2 may also comprise controlling S4 the controllable valve 30 to close the second coolant inlet. The actions S3 and S4 are indicated as optional in **Fig. 5** by the dashed outlines of the respective boxes.

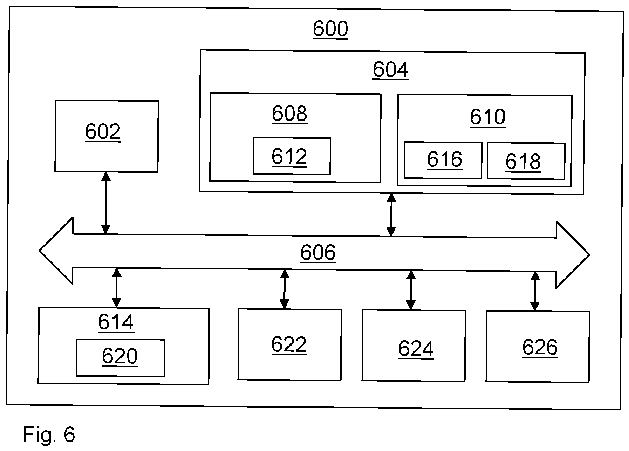

**Fig. 6** is a schematic diagram of the computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### Examples

1. An electric machine assembly 1 comprising:
   - a stator winding 10 comprising coils arranged around a first axis H between a first end winding 12 and a second end winding 14 of the stator winding 10;
   - a winding housing 16 accommodating the stator winding 10, the winding housing 16 further comprising a first coolant inlet 18 for a first coolant A and a second coolant inlet 20 for a second coolant B,
   wherein the first coolant inlet 18 is adapted to discharge the first coolant A into the winding housing 16 towards the stator winding 10, wherein the second coolant inlet 20 is adapted to discharge the second coolant B into the housing 16 towards the first end winding 12 and/or towards the second end winding 14.
2. The electric machine assembly 1 according to example 1, further comprising:
   - a first source 22 of the first coolant A, the first source 22 being fluidly connected to the first coolant inlet 18, and
   - a second source 24 of the second coolant B, the second source 24 being fluidly connected to the second coolant inlet 20.
3. The electric machine assembly 1 according to example 1 or example 2 wherein the first coolant inlet 18 is adapted to discharge the first coolant A into the winding housing 16 towards the stator winding 10 at a position between the first end winding 12 and the second end winding 14.
4. The electric machine assembly 1 according to example 2 wherein the first source 22 of the first coolant A comprises oil.
5. The electric machine assembly 1 according to example 3 or 4 wherein the first coolant inlet 18 is adapted to discharge at least a portion of the first coolant A in the form of droplets towards the first end winding 12 and/or towards the second end winding 14.
6. The electric machine assembly 1 according to any one of the preceding examples, wherein the second coolant inlet 20 is adapted to discharge the second coolant B into the winding housing 16 towards the first end winding 12 and/or towards the second end winding 14 and onto at least a portion of the first coolant A.
7. The electric machine assembly 1 according to any one of the preceding examples, wherein the second coolant inlet 20 is arranged along a circumference of the first end winding 12 and/or the second end winding 14, such as along the whole circumference, or more preferably along up to 80% of the circumference, or most preferably along up to 60% of the circumference.
8. The electric machine assembly 1 according to example 2, wherein the second source 24 of the second coolant B comprises compressed gas fluidly connected to a vortex tube 26 adapted to receive the compressed gas and to supply gas as the second coolant B to the second coolant inlet 20.
9. The electric machine assembly 1 according to any one of the preceding examples, further comprising a monitoring unit 28, and a controllable valve 30 adapted to open and close the second coolant inlet 20.
10. A computer system 600 comprising processing circuitry 602 configured to control cooling of a stator winding 10 of the electric machine assembly 1 according to example 9, the processing circuitry 602 being configured to:
   - receive, from the monitoring unit 28, data indicative of a pre-determined temperature condition of the first end winding 12 and/or of the second end winding 14,
   - control the controllable valve 30 to open the second coolant inlet 20 to discharge the second coolant B into the winding housing 16 towards the first end winding 12 and/or towards the second end winding 14 and onto at least a portion of the first coolant A.
11. The computer system 600 of example 10, the processing circuitry 602 further being configured to:
   - receive, from the monitoring unit 28, data indicative of a termination of the pre-determined temperature condition of the first end winding 12 and/or of the second end winding 14,
   - control the controllable valve 30 to close the second coolant inlet 20.
12. The computer system 600 of example 10 or 11, wherein the pre-determined temperature condition is a temperature exceeding a threshold temperature.
13. The computer system 600 of example 10 or 11, wherein the pre-determined temperature condition is an upcoming increased power outtake of the electric machine assembly 1.
14. A computer-implemented method 2 for controlling cooling a stator winding 10 of the electric machine assembly 1 according to example 9, the method 2 comprising, by the processing circuitry 602:
   - receiving S1 from the monitoring unit 28, data indicative of a pre-determined temperature condition of the first end winding 12 and/or of the second end winding 14,
   - controlling S2 the controllable valve 30 to open the second coolant inlet 20 to discharge the second coolant B into the winding housing 16 towards the first end winding 12 and/or towards the second end 14 winding and onto at least a portion of the first coolant A.
15. The method 2 according to example 14, further comprising, by the processing circuitry 602:
   - receiving S3 from the monitoring unit 28, data indicative of a termination of the pre-determined temperature condition of the first end winding 12 and/or of the second end winding 14,
   - controlling S4 the controllable valve 30 to close the second coolant inlet 20.
16. A computer program product 620 comprising program code for performing, when executed by the processing circuitry 602, the method 2 of any one of examples 14 or 15.
17. A non-transitory computer-readable storage medium 614 comprising instructions, which when executed by the processing circuitry 602, cause the processing circuitry 602 to perform the method 2 of any one of examples 14 or 15.
18. A vehicle, vessel or stationary machinery 3) comprising the electric machine assembly 1) according to any one of examples 1-9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric machine assembly (1) comprising:
- a stator winding (10) comprising coils arranged around a first axis (H) between a first end winding (12) and a second end winding (14) of the stator winding (10);
- a winding housing (16) accommodating the stator winding (10), the winding housing (16) further comprising a first coolant inlet (18) for a first coolant (A) and a second coolant inlet (20) for a second coolant (B),
wherein the first coolant inlet (18) is adapted to discharge the first coolant (A) into the winding housing (16) towards the stator winding (10), wherein the second coolant inlet (20) is adapted to discharge the second coolant (B) into the housing (16) towards the first end winding (12) and/or towards the second end winding (14).

2. The electric machine assembly (1) according to claim 1, further comprising:
- a first source (22) of the first coolant (A), the first source (22) being fluidly connected to the first coolant inlet (18), and
- a second source (24) of the second coolant (B), the second source (24) being fluidly connected to the second coolant inlet (20).

3. The electric machine assembly (1) according to any one of the preceding claims, wherein the second coolant inlet (20) is adapted to discharge the second coolant (B) into the winding housing (16) towards the first end winding (12) and/or towards the second end winding (14) and onto at least a portion of the first coolant (A).

4. The electric machine assembly (1) according to any one of the preceding claims, wherein the second coolant inlet (20) is arranged along a circumference of the first end winding (12) and/or the second end winding (14), such as along the whole circumference, or more preferably along up to 80% of the circumference, or most preferably along up to 60% of the circumference.

5. The electric machine assembly (1) according to claim 2, wherein the second source (24) of the second coolant (B) comprises compressed gas fluidly connected to a vortex tube (26) adapted to receive the compressed gas and to supply gas as the second coolant (B) to the second coolant inlet (20).

6. The electric machine assembly (1) according to any one of the preceding claims, further comprising a monitoring unit (28), and a controllable valve (30) adapted to open and close the second coolant inlet (20).

7. A computer system (600) comprising processing circuitry (602) configured to control cooling of a stator winding (10) of the electric machine assembly (1) according to claim 6, the processing circuitry (602) being configured to:
- receive, from the monitoring unit (28), data indicative of a pre-determined temperature condition of the first end winding (12) and/or of the second end winding (14),
- control the controllable valve (30) to open the second coolant inlet (20) to discharge the second coolant (B) into the winding housing (16) towards the first end winding (12) and/or towards the second end winding (14) and onto at least a portion of the first coolant (A).

8. The computer system (600) of claim 7, the processing circuitry (602) further being configured to:
- receive, from the monitoring unit (28), data indicative of a termination of the pre-determined temperature condition of the first end winding (12) and/or of the second end winding (14),
- control the controllable valve (30) to close the second coolant inlet (20).

9. The computer system (600) of claim 7 or 8, wherein the pre-determined temperature condition is a temperature exceeding a threshold temperature.

10. The computer system (600) of claim 7 or 8, wherein the pre-determined temperature condition is an upcoming increased power outtake of the electric machine assembly (1).

11. A computer-implemented method (2) for controlling cooling a stator winding (10) of the electric machine assembly (1) according to claim 6, the method (2) comprising, by the processing circuitry (602):
- receiving (S1) from the monitoring unit (28), data indicative of a pre-determined temperature condition of the first end winding (12) and/or of the second end winding (14),
- controlling (S2) the controllable valve (30) to open the second coolant inlet (20) to discharge the second coolant (B) into the winding housing (16) towards the first end winding (12) and/or towards the second end (14) winding and onto at least a portion of the first coolant (A).

12. The method (2) according to claim 11, further comprising, by the processing circuitry (602):
- receiving (S3) from the monitoring unit (28), data indicative of a termination of the pre-determined temperature condition of the first end winding (12) and/or of the second end winding (14),
- controlling (S4) the controllable valve (30) to close the second coolant inlet (20).

13. A computer program product (620) comprising program code for performing, when executed by the processing circuitry (602), the method (2) of any one of claims 11 or 12.

14. A non-transitory computer-readable storage medium (614) comprising instructions, which when executed by the processing circuitry (602), cause the processing circuitry (602) to perform the method (2) of any one of claims 11 or 12.

15. A vehicle, vessel or stationary machinery (3) comprising the electric machine assembly (1) according to any one of claims 1-6.
